(19) **Europäisches Patentamt**
**European Patent Office**
**Office européen des brevets**

(11) **EP 4 560 548 A1**

(12) **EUROPEAN PATENT APPLICATION**
published in accordance with Art. 153(4) EPC

(43) Date of publication:
28.05.2025 Bulletin 2025/22

(21) Application number: 23842883.3

(22) Date of filing: 12.07.2023

(51) International Patent Classification (IPC):
*G06N 99/00* (2019.01)

(52) Cooperative Patent Classification (CPC):
G06N 7/01; G06N 3/047; G06N 5/01; G06N 99/00

(86) International application number:
PCT/JP2023/025658

(87) International publication number:
WO 2024/018958 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.07.2022 JP 2022117503

(71) Applicant: Resonac Corporation
Tokyo 105-7325 (JP)

(72) Inventors:
• SAKAGUCHI, Suguru
Tokyo 105-8518 (JP)
• KAKUDA, Kohsuke
Tokyo 105-8518 (JP)
• OKUNO, Yoshishige
Tokyo 105-8518 (JP)

(74) Representative: Strehl & Partner mbB
Maximilianstrasse 54
80538 München (DE)

(54) **INFORMATION PROCESSING DEVICE, INFORMATION PROCESSING SYSTEM, PROGRAM, AND METHOD FOR ASSISTING WITH CREATION OF ISING MODEL**

(57) An information processing device for assisting creation of an Ising model, includes an input reception unit for receiving an input of an objective function that formulates characteristics of a composite material according to a formulation and a condition of constraint on the formulation, and a data creation unit for creating the Ising model for causing an annealing type optimization machine to solve an optimal solution of the formulation that satisfies a constraint condition expression and optimizes the characteristics, wherein the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and the constraint condition expression is formulated so as not to be calculated as the optimal solution of the formulation in a case where at least one of the condition regarding the mix number and the condition related to the amount of substance is not satisfied.

FIG.4

**Description**

TECHNICAL FIELD

The present disclosure relates to information processing devices, information processing systems, programs, and methods for assisting with creation of Ising models.

BACKGROUND ART

Conventionally, there is a known technique for performing a ground state search by an annealing method using an Ising model or quadratic unconstrained binary optimization (QUBO), to calculate a stable combination of an A-site, a B-site, and an anion site of a Perovskite crystal structure at a high speed even when the number of combinations is enormous (refer to Patent Document 1, for example).

PRIOR ART DOCUMENTS

PATENT DOCUMENTS

Patent Document 1: Japanese Laid-Open Patent Publication No. 2021-033768

DISCLOSURE OF THE INVENTION

PROBLEM TO BE SOLVED BY THE PRESENT INVENTION

For example, there is an optimal solution search problem for selecting an optimum combination from various combinations of formulations, such as when searching for a composition of a composite material having optimum characteristics, or the like. An annealing type optimization machine can solve the optimal solution search problem formulated by the Ising model.

In addition, in a case where an optimum combination is to be selected from various combinations of formulations, such as when searching for a composition of a composite material having the optimum characteristics or the like, a condition of constraint on the formulation is often imposed. For example, in a case where a target composite material is composed of a plurality of substance groups, a condition related to a number of substances to be mixed and a condition related to amounts of the substances are imposed as the condition of constraint on the formulation for each substance group. In the Ising model, the condition of constraint on the formulation can be imposed as a constraint condition.

In the Ising model, the constraint condition (penalty function) has a role of working so that a combination of the formulations, that does not satisfy the condition of constraint on the formulation, will not be selected as an optimum combination. However, although the constraint condition needs to be expressed by an Ising type mathematical expression (a constraint term), it is not easy to express the condition of constraint on the formulation by the constraint term.

One object of the present disclosure is to provide an information processing device, an information processing system, a program, and a method for assisting with creation of an Ising model, which can assist the creation of the Ising model for causing an annealing type optimization machine to solve an optimal solution search problem of a composite material having a condition of constraint on a formulation.

MEANS FOR SOLVING THE PROBLEM

The present disclosure includes the following configurations.

[1] An information processing device configured to assist with creation of an Ising model for causing an annealing type optimization machine to solve an optimal solution search problem of a composite material having a condition of constraint on a formulation, characterized by the information processing device comprising:

an input reception unit configured to receive an input of an objective function that formulates characteristics of the composite material according to the formulation, and the condition of constraint on the formulation; and
a data creation unit configured to create an Ising model for causing the annealing type optimization machine to solve an optimal solution of the formulation that satisfies a constraint condition expression obtained by formulating the condition of constraint on the formulation and that optimizes the characteristics, wherein
the condition of constraint on the formulation includes a condition related to a mix number of substances included in a substance group and to be mixed in the composite material, for each substance group composing the composite material, and a condition related to an amount of substances to be mixed in the composite material, for each substance included in the substance group, and

the constraint condition expression is formulated so as not to be calculated as the optimal solution of the formulation in a case where at least one of the condition regarding the mix number and the condition related to the amount of substance is not satisfied.

[2] The information processing device according to [1], characterized in that

the condition of constraint on the formulation further includes a condition indicating whether or not mixing to the composite material is required for each substance included in the substance group, and

the constraint condition expression is formulated so as not to be calculated as the optimal solution of the formulation in a case where the condition that the mixing to the composite material is required is not satisfied.

[3] The information processing device according to [1] or [2], wherein
in a case where the condition related to the amount of substance to be mixed in the composite material is set to a continuous value, an amount $r_i$ of a substance i is represented by a bit notation in the following formula (1), and whether or not the substance i is included in the composite material is represented by a bit notation,
[Math. 1]

$$r_i = \sum_{j=1}^{m_i} C_j n_{ij} \qquad \cdots (1)$$

$n_{i,j}$ denotes a number "0" or "1" of a binary representation of a formulation of the substance i,
$C_j$ denotes a coefficient of the binary representation of the formulation of the substance i,
$m_i$ denotes a maximum natural number satisfying $2^{m_i-1} \cdot C_1 < M_{i,MAX}$,
$C_1$ denotes an amount of the substance to be mixed in minimum units, and
$M_{i,MAX}$ denotes a maximum amount of the amount $r_i$ of the substance i.

[4] The information processing device according to [3], wherein, in a case where the condition related to the amount of substance to be mixed in the composite material is set to a discrete value, the amount $r_i$ of the substance i is represented by a bit notation, and whether or not the substance i is included in the composite material is represented by a bit notation.

[5] The information processing device according to [3] or [4], wherein
the constraint condition expression includes a condition satisfying the following expression (2) and expression (3) for each substance group k,

[Math. 2]

$$\begin{cases} \displaystyle\sum_{i=L_k+1}^{L_k+N_k} n_{i0} \leq N_k - K_{k,MIN} \qquad \cdots(2) \\[4em] \displaystyle\sum_{i=L_k+1}^{L_k+N_k} n_{i0} \geq N_k - K_{k,MAX} \qquad \cdots(3) \end{cases}$$

a substance number i of the substance included in a substance group $K_k$ is $L_k+1$ to $L_k+N_k$,
$N_k$ denotes a number of substances included in the substance group $K_k$,
the mix number is greater than or equal to $K_{k,MIN}$ types and less than or equal to $K_{k,MAX}$ types,
$L_k$ is represented by

[Math. 3]

$$L_k = \sum_{k=1}^{k-1} N_k \qquad \cdots(4)$$

$n_{i,0}$ denotes an auxiliary variable that becomes "0" in a case where the substance i is included in the composite material, and becomes "1" in a case where the substance i is not included in the composite material.

[6] The information processing device according to any one of [3] to [5], wherein
the constraint condition expression includes a condition satisfying the following expression (5) and expression (6) for each substance i,

[Math. 4]

$$\begin{cases} (m_i + 1)n_{i0} + \sum_{j=1}^{m_i} n_{ij} \leq m_i + 1 & \cdots(5) \\\\ (m_i + 1)n_{i0} + \sum_{j=1}^{m_i} n_{ij} \geq 1 & \cdots(6) \end{cases}$$

$n_{i,0}$ denotes an auxiliary variable that is "0" in a case where the substance i is included in the composite material, and is "1" in a case where the substance i is not included in the composite material,
$m_i$ denotes a maximum natural number satisfying $2^{m_i-1} \cdot C_1 < M_{i,MAX}$ in a case where a condition related to the amount $r_i$ of the substance i to be mixed in the composite material is set by a continuous value,
$C_1$ denotes the minimum unit of the amount of substance to be mixed, and
$m_i$ denotes a number of discrete values in a case where the condition related to the amount $r_i$ of the substance i to be mixed to the composite material is set by a discrete value.

[7] The information processing device according to any one of [3] to [6], wherein
the constraint condition expression includes a condition satisfying the following expression (7) and expression (8) for each substance i in a case where a condition related to the amount of substance to be mixed in the composite material is set by a continuous value, and

[Math. 5]

$$\begin{cases} \dfrac{M_{i,MIN} + M_{i,MAX}}{2} n_{i0} + \sum_{j=1}^{m_i} C_j n_{ij} \leq M_{i,MAX} & \cdots(7) \\\\ \dfrac{M_{i,MIN} + M_{i,MAX}}{2} n_{i0} + \sum_{j=1}^{m_i} C_j n_{ij} \geq M_{i,MIN} & \cdots(8) \end{cases}$$

$M_{i,MIN}$ denotes a minimum amount for the amount $r_i$ of the substance i, and
$n_{i,0}$ denotes an auxiliary variable that is "0" in a case where the substance i is included in the composite material, and is "1" in a case where the substance i is not included in the composite material.

[8] The information processing device according to any one of [3] to [7], wherein
the constraint condition expression includes a condition satisfying the following formula (9) for each substance i in a case where a condition related to an amount of substance to be mixed in the composite material is set by a discrete value, and
[Math. 6]

$$\sum_{j=1}^{m_i} n_{ij} = 1 \qquad \cdots(9)$$

$m_i$ denotes a number of discrete values.
[9] The information processing device according to any one of [3] to [8], wherein
the constraint condition expression includes a condition satisfying an auxiliary variable that is "0" for each substance i that is required to be mixed in the composite material, where the auxiliary variable is "0" in a case where the substance i is included in the composite material and is "1" in a case where the substance i is not included in the composite material.
[10] The information processing device according to any one of [1] to [9], wherein
the constraint condition expression is classified into a plurality of types, according to a condition related to a mix number of substances included in the substance group to be mixed in the composite material for each substance group composing the composite material, a condition related to an amount of substance to be mixed in the composite material for each substance included in the substance group, and a condition indicating whether or not mixing of the substance in the composite material is required for each substance included in the substance group.
[11] An information processing system having an annealing type optimization machine, and an information processing device configured to assist with creation of an Ising model for causing the annealing type optimization machine to solve an optimal solution search problem of a composite material including a condition of constraint on a formulation, characterized by the information processing system comprising:

an input reception unit configured to receive an input of an objective function that formulates characteristics of the composite material according to the formulation, and a condition of constraint on the formulation;
a data creation unit configured to create the Ising model for causing the annealing type optimization machine to solve an optimal solution of the formulation that satisfies a constraint condition expression obtained by formulating the condition of constraint on the formulation and optimizes the characteristics;
an optimal solution calculation unit configured to calculate the optimal solution of the formulation using the Ising model; and
a display unit configured to display the optimal solution of the formulation, wherein
the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and
the constraint condition expression is formulated so as not to be calculated as the optimal solution of the formulation in a case where at least one of the condition regarding the mix number and the condition related to the amount of substance is not satisfied.

[12] A program for causing an information processing device configured to assist with creation of an Ising model for causing an annealing type optimization machine to solve an optimal solution search problem of a composite material having a condition of constraint on a formulation to perform a process characterized by:

a procedure receiving an input of an objective function that formulates characteristics of the composite material according to the formulation, and a condition of constraint on the formulation; and
a procedure creating the Ising model for causing the annealing type optimization machine to solve an optimal solution of the formulation that satisfies a constraint condition expression obtained by formulating the condition of constraint on the formulation and optimizes the characteristics, wherein
the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and

the constraint condition expression is formulated so as not to be calculated as the optimal solution of the formulation in a case where at least one of the condition regarding the mix number and the condition related to the amount of substance is not satisfied.

[13] A method for assisting an information processing device with creation of an Ising model for causing an annealing type optimization machine to solve an optimal solution search problem of a composite material including a condition of constraint on a formulation, characterized by the method comprising:

receiving an input of an objective function that formulates characteristics of the composite material according to the formulation, and a condition of constraint on the formulation; and
creating the Ising model for causing the annealing type optimization machine to solve an optimal solution of the formulation that satisfies a constraint condition expression obtained by formulating the condition of constraint on the formulation and optimizes the characteristics, wherein
the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and
the constraint condition expression is formulated so as not to be calculated as the optimal solution of the formulation in a case where at least one of the condition regarding the mix number and the condition related to the amount of substance is not satisfied.

EFFECTS OF THE INVENTION

According to the present disclosure, it is possible to provide an information processing device, an information processing system, a program, and a method for assisting with creation of an Ising model, which can assist the creation of the Ising model for causing an annealing type optimization machine to solve an optimal solution search problem of a composite material having a condition of constraint on a formulation.

BRIEF DESCRIPTION OF THE DRAWINGS

[FIG. 1] FIG. 1 is a configuration diagram of an example of an information processing system according to the present embodiment.
[FIG. 2] FIG. 2 is a hardware configuration diagram of an example of a computer according to the present embodiment.
[FIG. 3] FIG. 3 is a diagram for explaining an example of a condition of constraint on a formulation.
[FIG. 4] FIG. 4 is a configuration diagram of an example of the information processing system according to the present embodiment.
[FIG. 5] FIG. 5 is a diagram for explaining an example of types of classified substances.
[FIG. 6] FIG. 6 is a diagram for explaining an example of types of classified substances.
[FIG. 7] FIG. 7 is a diagram for explaining an example of bit notations of substances of "Type 1" and "Type 3".
[FIG. 8] FIG. 8 is a diagram for explaining a specific example of a bit notation of "Substance 1" of "Type 1".
[FIG. 9] FIG. 9 is a diagram for explaining an example of the bit notations of substances of "Type 2" and "Type 4".
[FIG. 10] FIG. 10 is a diagram for explaining an example of the bit notations of the substances of "Type 2" and "Type 4".
[FIG. 11] FIG. 11 is a diagram illustrating an example of a bit notation of a composition of a composite material.
[FIG. 12] FIG. 12 is a flow chart illustrating an example of a processing procedure of the information processing system according to the present embodiment.

MODE OF CARRYING OUT THE INVENTION

Next, embodiments of the present invention will be described in detail. The present invention is not limited to the following embodiments.

<System Configuration>

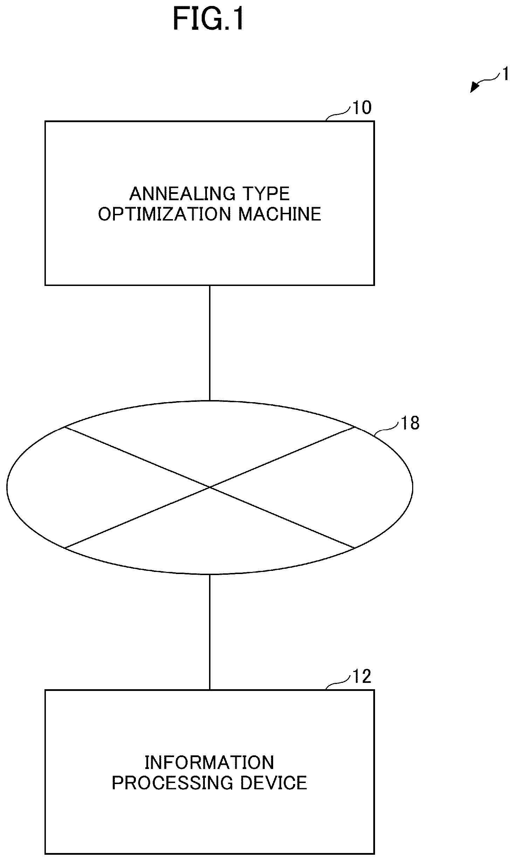

FIG. 1 is a configuration diagram of an example of an information processing system according to the present embodiment. An information processing system 1 illustrated in FIG. 1 includes an annealing type optimization machine 10, and an information processing device 12. The annealing type optimization machine 10 and the information processing device 12 are communicably connected to each other via a communication network 18, such as a local area network (LAN), or the Internet, or the like, so as to enable a data communication therebetween.

The annealing type optimization machine 10 is an example of a device that solves an optimal solution search problem (optimization problem) using an Ising model. The optimizing problem is a problem of obtaining a solution for minimizing or maximizing an objective function among solutions satisfying a constraint condition. In the optimization problem, a solution to be obtained is expressed by a decision variable. The objective function is a function in which a value to be minimized or maximized is expressed using the decision variable. The constraint condition is a relational expression in which a requirement to be satisfied is expressed by the decision variable.

A combinatorial optimization problem is an optimization problem having a combinatorial structure. The combinatorial optimization problem is a problem of obtaining a combination of decision variables that minimizes or maximizes the objective function, among combinations of decision variables that satisfy the constraint condition.

The annealing type optimization machine 10 may be implemented in a quantum annealing based quantum computer, or may be implemented in an Ising machine (annealing machine) that implements a quantum annealing scheme by a digital circuit, such as a field programmable gate array (FPGA), or a graphics processing unit (GPU), or the like. The annealing type optimization machine 10 may also be implemented in a digital annealer (registered trademark), which is an example of the Ising machine, for example.

The annealing type optimization machine 10 solves the optimization problem reduced to the Ising model by a convergence operation of the Ising model. The Ising model can also be expressed using the QUBO. An energy function of the Ising model and a cost function of the QUBO are equivalent to each other by change of variables.

The Ising model is a statistical dynamic model representing a behavior of a magnetic material. The Ising model has properties such that states of spins are updated so that the energy (Hamiltonian) becomes a minimum due to an interaction between the spins of the magnetic material, and the energy finally becomes the minimum. The annealing type optimization machine 10 reduces the optimization problem to the Ising model, and obtains the state in which the energy becomes the minimum, thereby solving the state as an optimal solution to the optimization problem.

The information processing device 12 is a device operated by a user, such as a PC, a tablet terminal, a smartphone, or the like. With respect to a user who desires to cause the annealing type optimization machine 10 to solve the optimization problem, the information processing device 12 assists with creation of the Ising model for causing the annealing type optimization machine 10 to solve the optimization problem, as will be described later.

In addition, the information processing device 12 creates input information for the annealing type optimization machine 10, to be input to the annealing type optimization machine 10 to solve the optimization problem, based on a user operation. The input information input to the annealing type optimization machine 10 includes an objective function, a constraint condition, or the like that are written in an Ising type and created as will be described later.

The user inputs the input information for the annealing type optimization machine 10, to the annealing type optimization machine 10, and thereby causing the annealing type optimization machine 10 to solve the optimization problem reduced to the Ising model.

Accordingly, the information processing device 12 assists the user with the creation of the Ising model for causing the annealing type optimization machine 10 to solve the optimization problem. The information processing device 12 receives the optimal solution to the optimization problem solved by the annealing type optimization machine 10, and outputs the optimal solution so that the user can confirm the optimal solution, by displaying the optimal solution on a display device, for example.

The information processing system 1 of FIG. 1 is merely an example, and the user may access and utilize the information processing device 12 from a user terminal (not illustrated) that is connected to the information processing device 12 via the communication network 18.

The annealing type optimization machine 10 may be implemented in a cloud computing service. For example, the annealing type optimization machine 10 may be utilizable by calling an application programming interface (API) via the communication network 18.

Further, the annealing type optimization machine 10 is not limited to being implemented in the cloud computing service, and may be implemented in on-premise or may be operated by another company. The annealing type optimization machine 10 may be implemented in a plurality of computers.

In a mode in which the user accesses and utilizes the information processing device 12, the information processing device 12 may be implemented in the cloud computing service, or may be implemented in the on-premise, or may be operated by another company, or may be implemented in the plurality of computers. The information processing system 1 of FIG. 1 may of course have various examples of system configurations depending on the application or purpose.

<Hardware Configuration>

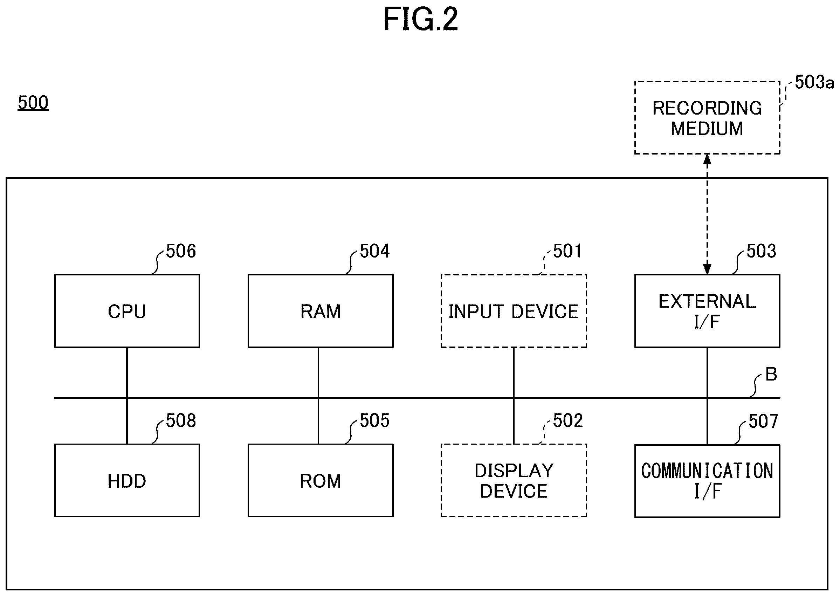

The information processing device 12 of FIG. 1 is implemented in a computer 500 having a hardware configuration illustrated in FIG. 2, for example.

FIG. 2 is a hardware configuration diagram of an example of the computer according to the present embodiment. The computer 500 illustrated in FIG. 2 includes an input device 501, a display device 502, an external I/F 503, a RAM 504, a ROM 505, a CPU 506, a communication I/F 507, a HDD 508, or the like, which are connected to each one another via a bus B. The input device 501 and the display device 502 may be connected to each other.

The input device 501 is a touchscreen panel, operation keys and buttons, a keyboard, a mouse, or the like used by the user to input various signals. The display device 502 is formed by a display, such as a liquid crystal display or an organic EL display or the like that displays a screen, a speaker that outputs sound data, such as voice or sound or the like, or the like. The communication I/F 507 is an interface used by the computer 500 to perform the data communication.

The HDD 508 is an example of a non-volatile storage device that stores programs and data. The programs and data that are stored include an OS, which is basic software for controlling the entire computer 500, applications for providing various functions on the OS, or the like. The computer 500 may utilize a drive device (for example, a solid state drive (SSD) or the like) using a flash memory as a storage medium, instead of utilizing the HDD 508.

The external I/F 503 is an interface with respect to an external device. The external device includes a recording medium 503a or the like. Hence, the computer 500 can read from and/or write data to the recording medium 503a via the external I/F 503. The recording medium 503a includes a flexible disk, a CD, a DVD, a SD memory card, a USB memory, or the like.

The ROM 505 is an example of a non-volatile semiconductor memory (storage device) that can store programs and data even when the power is turned off. The ROM 505 stores programs and data, such as a BIOS to be executed when the computer 500 is started, OS settings, network settings, or the like. The RAM 504 is an example of a volatile semiconductor memory (storage device) that temporarily stores programs and data.

The CPU 506 is an arithmetic unit that reads the programs and data from the storage device, such as the ROM 505, the HDD 508, or the like to the RAM 504, and executes processes to control the entire computer 500 and implement functions thereof. The information processing device 12 according to the present embodiment can implement various functions, as will be described later. A description on the hardware configuration of the annealing type optimization machine 10 will be omitted.

<Example of Object To Solve As Optimization Problem>

In the following, an example of solving a composition of a composite material having optimum characteristics, among compositions of composite materials having a condition of constraint on the formulation, as a combinatorial optimization problem, will be described.

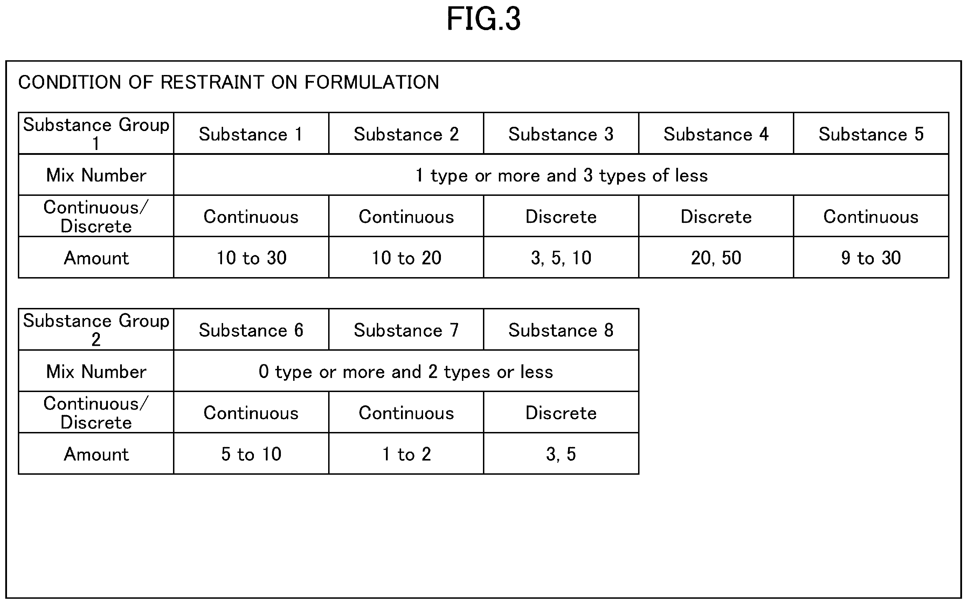

For example, in the present embodiment, the condition of constraint on the formulation, such as that illustrated in FIG. 3, is utilized. FIG. 3 is a diagram for explaining an example of the condition of constraint on the formulation. The composite material is composed of a plurality of substance groups. FIG. 3 illustrates an example in which the composite material is composed of a "Substance Group 1" and a "Substance Group 2". FIG. 3 illustrates an example in which the condition of constraint on the formulation exists for each substance group composing the composite material.

The condition of constraint on the formulation in FIG. 3 includes a mix number, continuous/discrete, and amount, as items. The mix number is a condition related to the number of substances included in the substance group and to be mixed in the composite material, and is set with a minimum number to be mixed and a maximum number to be mixed. The continuous/discrete is a condition related to the amount of substance to be mixed in the composite material, and is set with whether the amount of substance to be mixed in the composite material is a continuous value or a discrete value.

The amount is a condition related to the amount of substance to be mixed in the composite material, and is set with the amount of substance to be mixed in the composite material. In a case where the amount of substance to be mixed in the composite material is a continuous value, the amount is set with a minimum amount and a maximum amount. In a case where the amount of substance to be mixed in the composite material is a discrete value, the amount is set with the amount of substance.

For example, the condition of constraint on the formulation in FIG. 3 indicates that five types of substances "Substance 1" to "Substance 5" are included in the "Substance group 1", and 1 or more types and 3 or less types of substances among the five types of substances "Substance 1" to "Substance 5" are to be mixed in the composite material. In addition, the condition of constraint on the formulation in FIG. 3 indicates that 3 types of substances "Substance 6" to "Substance 8" are included in the "Substance Group 2", and that 0 or more types and 2 or less types of substances among the 3 types of substances "Substance 6" to "Substance 8" are to be mixed in the composite material.

In the present embodiment, it is an object to solve the formulation of substances, satisfying the condition of constraint on the formulation in FIG. 3 and optimizing the characteristics of the composite material, as the optimal solution.

<Functional Configuration>

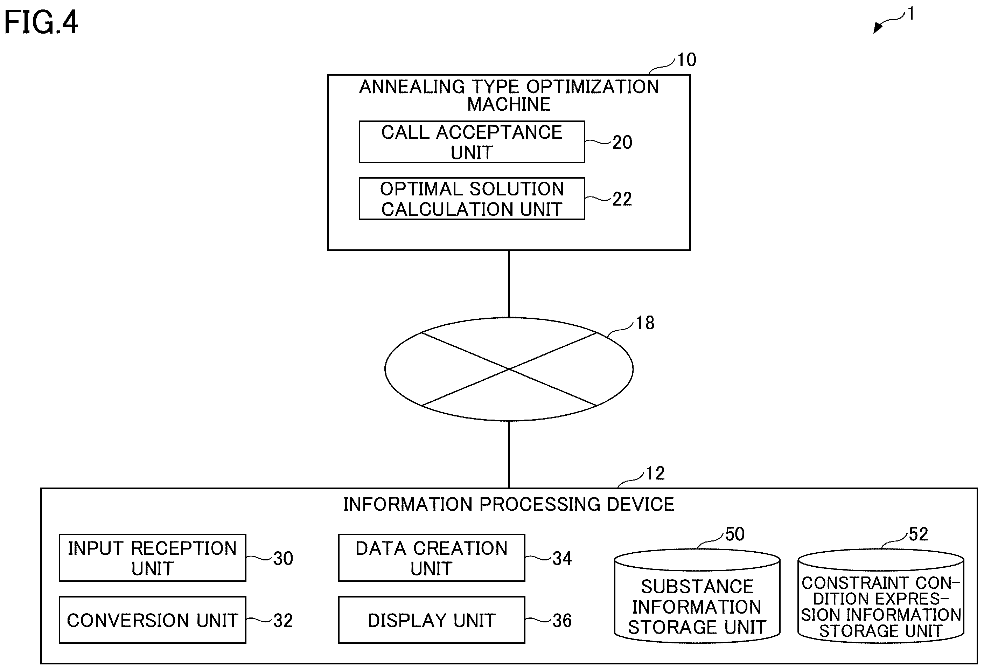

A configuration of the information processing system 1 according to the present embodiment will be described. FIG. 4 is a configuration diagram of an example of the information processing system according to the present embodiment. In the configuration diagram of FIG. 4, illustration of components unnecessary for the description of the present embodiment will be omitted, as appropriate.

The annealing type optimization machine 10 illustrated in FIG. 4 includes a call reception unit 20, and an optimal solution calculation unit 22. The information processing device 12 includes an input reception unit 30, a conversion unit 32, a data creation unit 34, a display unit 36, a substance information storage unit 50, and a constraint condition expression information storage unit 52.

The input reception unit 30 is an input interface that receives an operation from the user. The input reception unit 30 receives information required by the annealing type optimization machine 10 to solve the combinatorial optimization problem, input from the user. For example, the input reception unit 30 receives an input of the objective function that formulates the characteristics of the composite material according to the formulation of the substances.

The objective function is a function obtained by formulating the characteristics of the composite material according to the formulation of the substances, and is created so that the smaller the value of the objective function, the more desirable the characteristics are to the user. For example, the characteristics desired by the user are high performance, low cost, or the like. In addition, the input reception unit 30 receives an input of the condition of constraint on the formulation, such as that illustrated in FIG. 3, for example.

The conversion unit 32 converts the condition of constraint on the formulation into a constraint condition expression. The constraint condition expression is an Ising type mathematical expression in which the condition of constraint on the formulation is formulated. The constraint condition expression is formulated so as to become "0" in a case where the condition of constraint on the formulation is satisfied, and to become a large value in a case where the condition of constraint on the formulation is not satisfied.

For example, the constraint condition expression is formulated so as to have the large value in the case where at least one of the condition related to the mix number of substances included in the substance group and to be mixed in the composite material, and the condition related to the amount of substance to be mixed in the composite material, is not satisfied for each substance group composing the composite material.

An equality constraint represented by the following expression (10) and an inequality constraint represented by the following expression (11) can be expressed by an Ising type mathematical expression.

[Math. 7]

$$\sum_i c_i x_i = k \qquad \cdots (10) \qquad c_i, k :: \text{Real number} \\ x_i :: 0 \text{ or } 1$$

$$\sum_i d_i x_i \le l \qquad \cdots (11) \qquad d_i, l :: \text{Real number} \\ x_i :: 0 \text{ or } 1$$

The data creation unit 34 creates an Ising model E represented the following formula (12), for example, for causing the annealing type optimization machine 10 to solve from the objective function and the constraint condition expression.

$$E = E_1 + E_2 \qquad \cdots (12)$$

$E_1$ denotes an objective function written in Ising type expression. $E_2$ denotes a constraint condition expression written in Ising type expression. $E_2$ becomes a number corresponding to the number of conditions of constraints on the formulation, and is included in one or more terms (constraint terms) of the Ising model E.

Further, because $E_1$ and $E_2$ are Ising type mathematical expressions, $E_1$ and $E_2$ can be represented by a QUBO type notation as illustrated in the following formula (13).

[Math. 8]

$$E = \sum_{i=1}^{N} \sum_{j=i+1}^{N} J_{ij} x_i x_j + \sum_{i=1}^{N} h_i x_i \qquad \cdots(13)$$

$x_i :: 0$ or $1$ $J_{ij}$, $h_i ::$ Real number

[0049] The data creation unit 34 creates input information in a data format utilizable by the annealing type optimization machine 10 from the formula (12) described above, and transmits the input information to the annealing type optimization machine 10. The display unit 36 displays the optimal solution received from the annealing type optimization machine 10 on the display device 502, and enables the user to confirm the optimal solution. The optimal solution displayed on the display device 502 is displayed as information on the composition of the composite material, for example, which is easy for the user to understand.

The substance information storage unit 50 stores characteristics (performance, cost, or the like) of the substances included in the substance group. For example, the characteristics of the composite material can be represented by a sum of values obtained by multiplying a mixing ratio to the characteristics of the substances mixed in the composite material. The constraint condition expression information storage unit 52 stores information of constraint condition expressions defined according to the types of classified substances, as will be described later.

The call reception unit 20 of the annealing type optimization machine 10 receives a call from the information processing device 12, and receives from the information processing device 12 the input information for the annealing type optimization machine 10 created from the formula (12) described above.

The optimal solution calculation unit 22 obtains $\{x_i\}$ that minimizes the Ising model E, based on the input information received by the call reception unit 20. Obtaining $\{x_i\}$ that minimizes the Ising model E is equivalent to obtaining a composition of the composite material that satisfies the condition of the constraint on the formulation expressed by $E_2$ and minimizes the objective function expressed by $E_1$.

The optimal solution calculation unit 22 can calculate a formulation of substances that satisfies the constraint condition expression obtained by formulating the condition of constraint on the formulation, and optimizes the characteristics of the composite material, as the optimal solution. The call reception unit 20 transmits the optimal solution calculated by the optimal solution calculation unit 22 to the information processing device 12.

The configuration diagram of FIG. 4 is merely an example. The information processing system 1 according to the present embodiment can have various configurations. In the present embodiment, the input reception unit 30 receives the input of the condition of constraint on the formulation, however, the input reception unit 30 may receive an input of a formulated constraint condition expression.

<Types of Substances>

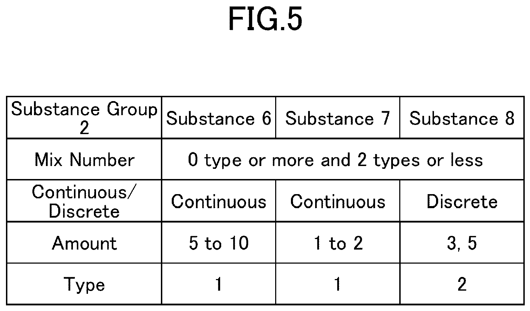

The types of substances included in the substance group composing the composite material can be classified and defined as illustrated in FIG. 5, for example. FIG. 5 is a diagram for explaining an example of the types of classified substances. As illustrated in FIG. 5, in the present embodiment, the substances are classified into substances of "Type 1" having the amount that is continuously determined, and substances of "Type 2" having the amount that is discretely determined.

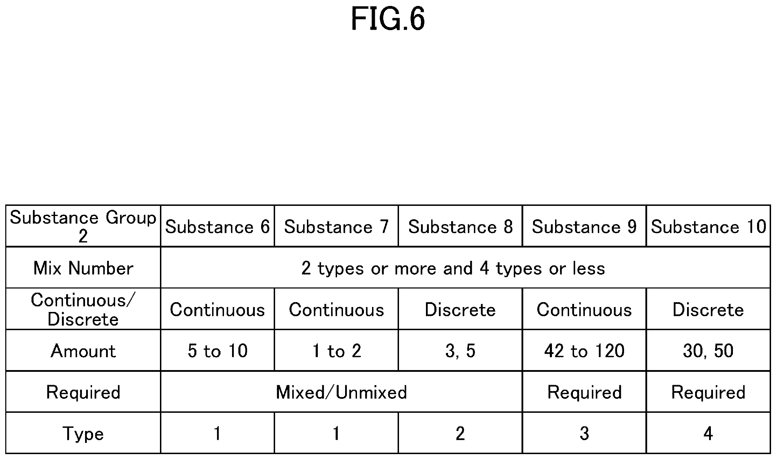

In addition, the types of substances included in the substance group composing the composite material can be classified and defined as illustrated in FIG. 6, for example. FIG. 6 is a diagram for explaining an example of the types of classified substances. As illustrated in FIG. 6, in the present embodiment, the substances are classified into substances of "Type 1" which may be mixed/unmixed and the amount is continuously determined, "Type 2" which may be mixed/unmixed and the amount is discretely determined, "Type 3" which must be mixed and the amount is continuously determined, and "Type 4" which must be mixed and the amount is discretely determined.

<Bit Notation of Substance>

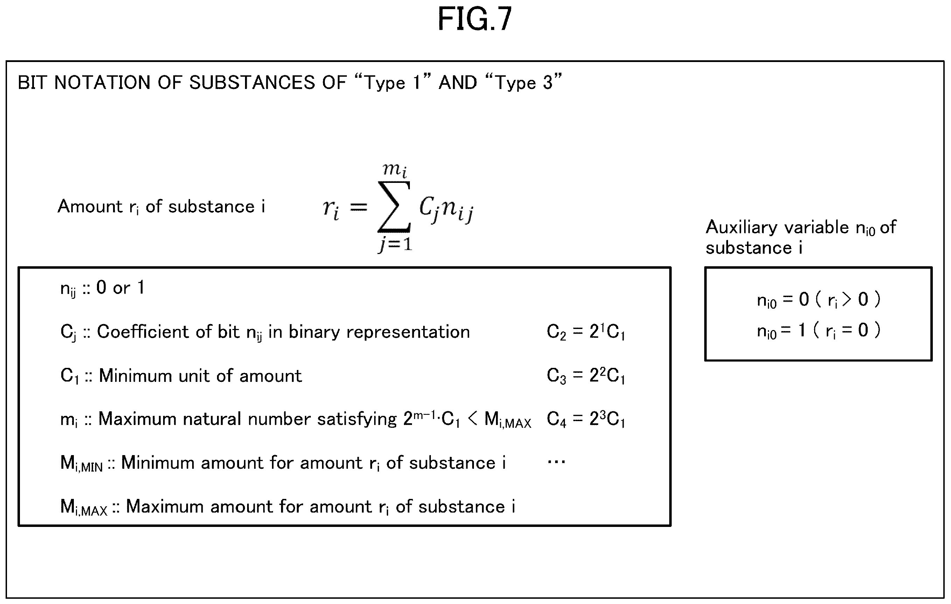

In addition, the following bit notation for representing the amount of each substance is required to express the condition of constraint on the formulation by the Ising model. For example, the bit notations of the substances of "Type 1" and "Type 3" become the bit notations illustrated in FIG. 7.

FIG. 7 is a diagram for explaining an example of bit notations of the substances of "Type 1" and "Type 3". For the substances of "Type 1" and "Type 3", an amount $r_i$ of a substance i is represented by the bit notation of the following formula (14), and whether or not the substance i is included in the composite material is represented by the bit notation of an auxiliary variable $n_{i0}$ of the substance i.

[Math. 9]

$$r_i = \sum_{j=1}^{m_i} C_j n \qquad \cdots(14)$$

$n_{ij}$ denotes a number "0" or "1" of the binary representation of the formulation of the substance i. $C_j$ denotes a coefficient of the bit $n_{ij}$ in the binary representation of the formulation of the substance i. When $C_1$ denotes a minimum unit of the amount of the substance to be mixed, $m_i$ is a maximum natural number satisfying $2^{m_i-1} \cdot C_1 < M_{i,MAX}$. $M_{i,MAX}$ denotes a maximum amount for the amount $r_i$ of the substance i. $M_{i,MIN}$ denotes a minimum amount for the amount $r_i$ of the substance i.

The auxiliary variable $n_{i0}$ becomes "0" in a case where the amount $r_i$ of the substance i is not 0 (the substance i is included in the composite material), and becomes "1" in a case where the amount $r_i$ of the substance i is 0 (the substance i is not included in the composite material).

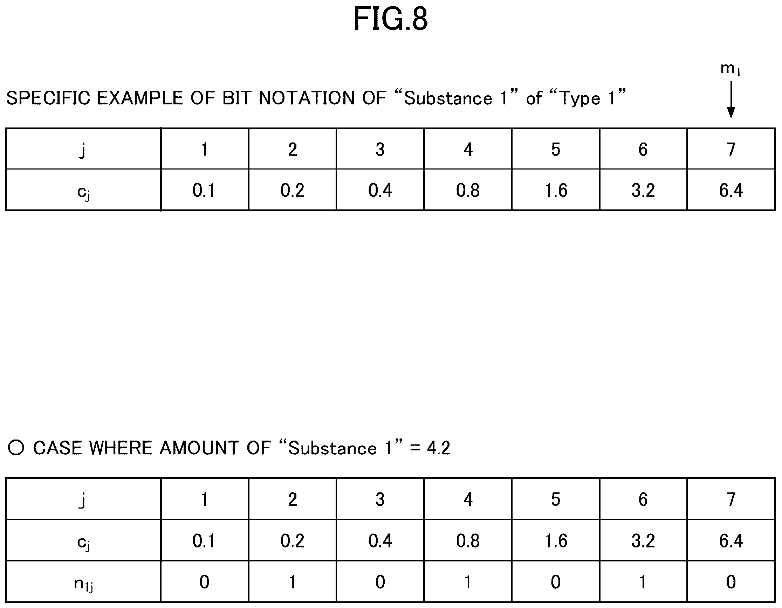

For example, the bit notation of the substance of "Type 1", having one significant digit after the decimal point and the amount of "2 to 10", becomes as illustrated in FIG. 8. FIG. 8 is a diagram for explaining a specific example of the bit notation of the "Substance 1" of "Type 1".

The maximum amount $M_{i,MAX}$ of the "Substance 1" is "10". Accordingly, the maximum natural number $m_i$ satisfying $C_m < M_{i,MAX}$ becomes "7". A number of bits that needs to be reserved for the "Substance 1" is 8 bits in total, including an auxiliary bit representing the auxiliary variable $n_{i0}$.

For example, in a case where the amount of the "Substance 1" is "4.2", the value of the auxiliary bit is "0" because the "Substance 1" is included in the composite material. Values of bits "j = 1 to 7" for representing the amount of the "Substance 1" are "1" for the bit "j = 2" representing the amount of "0.2", the bit "j = 4" representing the amount of "0.8", and the bit "j = 6" representing the amount of "3.2".

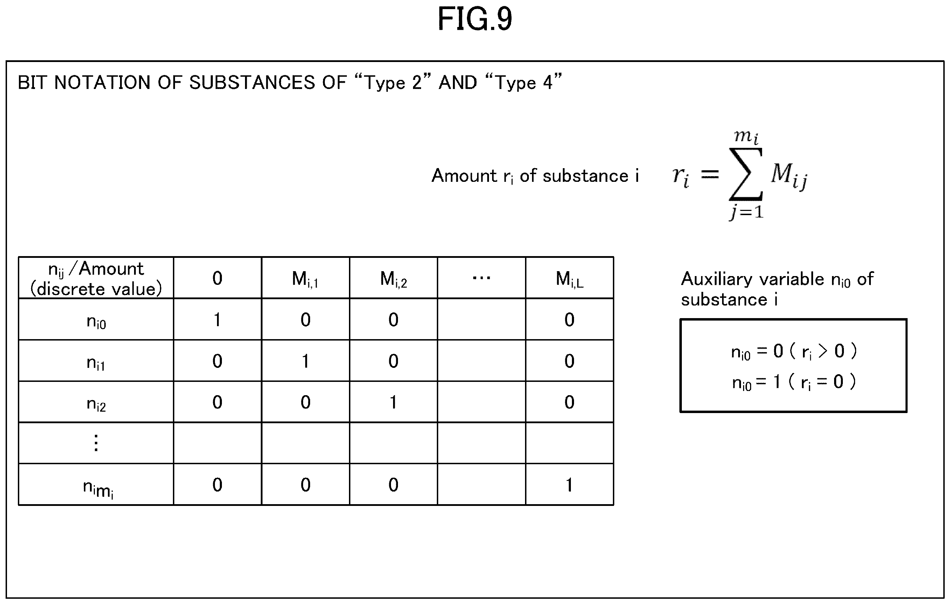

Moreover, the bit notation of the substances of "Type 2" and "Type 4" becomes as illustrated in FIG. 9, for example. FIG. 9 is a diagram for explaining an example of the bit notation of substances of "Type 2" and "Type 4". For the substances of "Type 2" and "Type 4", the amount $r_i$ of the substance i is represented by a bit notation of the following formula (15), and whether or not the substance i is included in the composite material is represented by a bit notation of the auxiliary variable $n_{i0}$ of the substance i.
[Math. 10]

$$\text{Amount } r_i \text{ of substance } i \qquad r_i = \sum_{j=1}^{m_i} M_{ij} \qquad \cdots(15)$$

In the case where the amount of the substance is a discrete value of "$M_{i,1}, M_{i,2}, \ldots, M_{i,L}$", the amount $r_i$ of the substance i is represented by a bit notation of a bit representing $M_{i,L}$, and whether or not the substance i is included in the composite material is represented by the bit notation of the auxiliary variable $n_{i0}$ of the substance i.

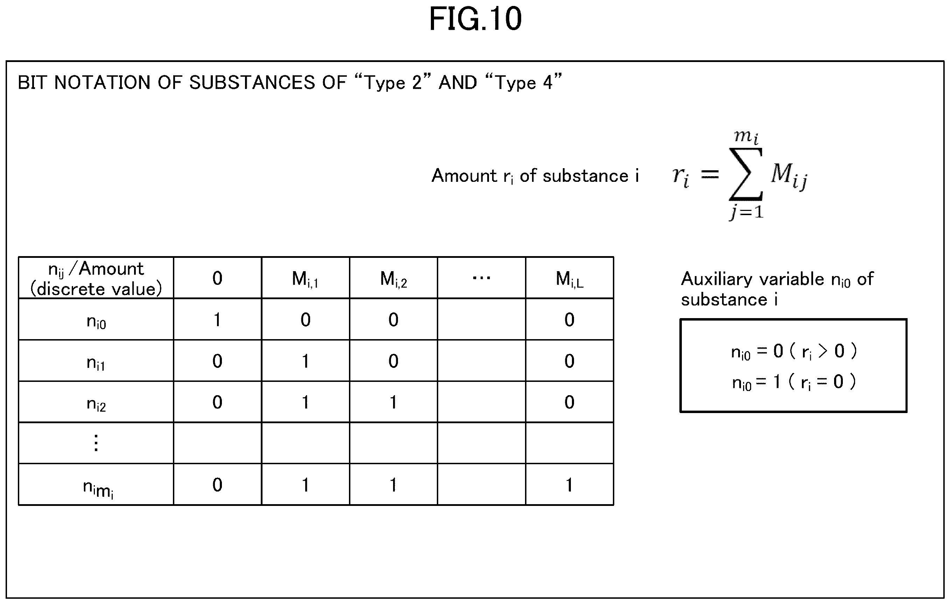

Further, the bit notation of the substances of "Type 2" and "Type 4" may be a bit notation illustrated in FIG. 10, for example. FIG. 10 is a diagram for explaining an example of the bit notation of the substances of "Type 2" and "Type 4". In the bit notation of FIG. 10, the amount $r_i$ of the substance i is represented by a plurality of bits representing the amount. In the following, an example representing the amounts of the substances i of "Type 2" and "Type 4" by the bit notation of FIG. 9 will be described.

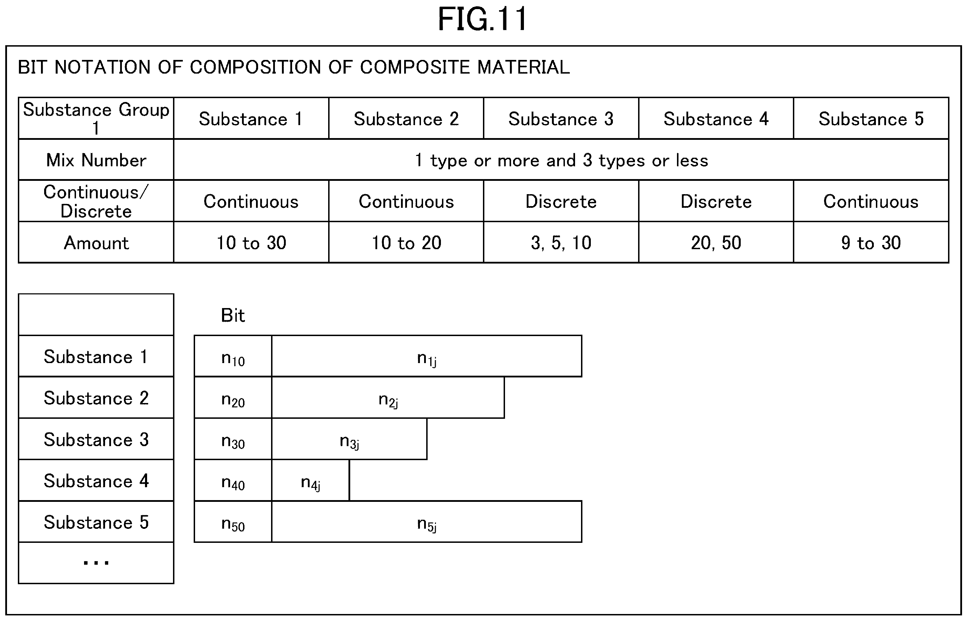

By utilizing the bit notation described above for expressing the amount of each substance, the composition of the composite material can be expressed by a bit notation illustrated in FIG. 11. FIG. 11 is a diagram illustrating an example of the bit notation representing the composition of the composite material.

FIG. 11 illustrates an example in which 5 types of "Substance 1" to "Substance 5" are included in a "Substance Group 1" composing the composite material. The "Substance 1", the "Substance 2", and the "Substance 5" are examples of the substances of "Type 1" or "Type 3". The "Substance 3" and the "Substance 4" are examples of the substances of "Type 2" or "Type 4".

A number of bits that needs to be reserved for the "Substance 1" to "Substance 5" is determined by the type of the substance and the amount of the substance, as described above. For example, $n_{1j}$ is a bit notation representing the amount of the "Substance 1". In a case where the minimum unit of the amount is 0.1 and the maximum amount of the "Substance 1" is "30", for example, the amount of the "Substance 1" can be represented by bit notations $n_{11}$ to $n_{19}$.

$n_{2j}$ is a bit notation representing the amount of the "Substance 2". $n_{3j}$ is a bit notation representing the amount of the "Substance 3". For example, the amount of the "Substance 3", which has 3 discrete values of amounts "3", "5", and "10", can be represented by bit notations $n_{31}$ to $n_{33}$. $n_{4j}$ is a bit notation representing the amount of the "Substance 4". $n_{5j}$ is a bit notation representing the amount of the "Substance 5".

When utilizing the bit notation in the annealing type optimization machine 10, a one-dimensional vector notation

{x_i} of the formula (13) can be utilized as the bit notation. By connecting the bit notations of the substances included in all of the substance groups composing the composite material, the composition of the composite material can be represented by the one-dimensional vector representation {x_i} of the formula (13).

<Constraint Condition>

In the present embodiment, the following constraint conditions are imposed in a case where the formulation of substances that optimizes the characteristics of the composite material is solved as a combinatorial optimization problem in the composition of the composite material composed of a plurality of substance groups.

<<Constraint Condition 1>>

In the present embodiment, the constraint conditions of the following expression (16) and expression (17) are imposed for each substance group k composing the composite material.

[Math. 11]

$$
\left\{
\begin{array}{l}
\displaystyle\sum_{i=L_k+1}^{L_k+N_k} n_{i0} \leq N_k - K_{k,MIN} \quad \cdots(16) \\
\\
\displaystyle\sum_{i=L_k+1}^{L_k+N_k} n_{i0} \geq N_k - K_{k,MAX} \quad \cdots(17)
\end{array}
\right.
$$

$$
L_k = \sum_{k=1}^{k-1} N_k \qquad \cdots(18)
$$

First, a substance number i is assigned to all of the substances as a serial number. When a number of types of substances included in the substance group $K_k$ is denoted by $N_k$, and $L_k$ represented by the formula (18) indicated above is defined, the substance number i of the substance included in the substance group $K_k$ is represented by $i = L_k+1$ to $L_k+N_k$.

Then, for example, the expression (16) and the expression (17) are defined for the number of substances to be mixed in the composite material from the substance group.

In the expressions (16) and the expression (17), $K_{k,MIN}$ denotes a minimum number of types of the substance i to be mixed in the composite material from the substance group $K_k$. $K_{k,MAX}$ denotes a maximum number of types of the substance i to be mixed in the composite material from the substance group $K_k$. For example, in the case of the condition of constraint on the formulation illustrated in FIG. 5, the minimum and maximum numbers of types of the substance i to be mixed in the composite material from the substance group 2 are "$C_{2,MIN} = 0$" and "$C_{2,MAX} = 2$", respectively.

The auxiliary variable $n_{i0}$ in the left terms of the expression (16) and the expression (17) indicates whether the substance i included in the substance group $K_k$ is to be mixed in the composite material ($n_{i0} = 0$) or not to be mixed in the composite material ($n_{i0} = 1$). Accordingly, the number of substances i to be mixed in the composite material from the substance group $K_k$ can be obtained by subtracting the value of the left term of the expression (16) or the expression (17) from the value of $N_k$.

The inequality constraint of the expression (16) is a constraint condition for determining whether or not the number of substances i to be mixed in the composite material from the substance group $K_k$ satisfies "the mix number is greater than or equal to $K_{k,MIN}$ types" included in the condition of constraint on the formulation. The inequality constraint of the expression (17) is a constraint condition for determining whether or not the number of substances i to be mixed in the composite material from the substance group $K_k$ satisfies "the mix number is less than or equal to $K_{k,MAX}$ types" included in the condition of constraint on the formulation.

Because the constraint conditions represented by the expressions (16) and the expression (17) are imposed on each substance group $K_k$ composing the composite material, in a case where 4 substance groups $K_k$ exist, 8 (= 4 × 2) constraint conditions are imposed. A constraint condition 1 is a constraint condition of the mix number.

<<Constraint Condition 2>>

In the present embodiment, the constraint conditions of the following expression (19) and expression (20) are imposed for each substance i.

[Math. 12]

$$
\begin{cases}
(m_i + 1)n_{i0} + \sum_{j=1}^{m_i} n_{ij} \le m_i + 1 & \cdots(19) \\[4ex]
(m_i + 1)n_{i0} + \sum_{j=1}^{m_i} n_{ij} \ge 1 & \cdots(20)
\end{cases}
$$

In the case of the substance i of "Type 1" or "Type 3", $m_i$ included in the expression (19) and expression (20) is the maximum natural number satisfying $2^{m_i-1} \cdot C_1 < M_{i,MAX}$ in binary representation, for example, when $C_1$ denotes the amount of the minimum unit of the substance to be mixed. In the case of the substance i of "Type 2" or "Type 4", $m_i$ included in the expression (19) and expression (20) is the number of discrete values indicating the amount $r_i$ of the substance i. Accordingly, $m_i+1$ indicates the number of bits reserved for the substance i, including the auxiliary bit representing auxiliary variable $n_{i0}$.

The inequality constraint of the expression (19) is a constraint condition for determining that a second left term is "0" in a case where the auxiliary variable $n_{i0}$ of the left term is "1", and determining that the second left term is "0 to $m_i$" in a case where the auxiliary variable $n_{i0}$ of the left term is "0".

The inequality constraint of the expression (20) is a constraint condition for determining that the second left term is not "0" in the case where the auxiliary variable $n_{i0}$ of the left term is "0".

Because the constraint conditions represented by the expression (19) and expression (20) are imposed for each substance i, when there are 20 substances i, 20 × 2 = 40 constraint conditions are imposed. The constraint condition 2 is a constraint condition of the auxiliary variable $n_{i0}$.

<<Constraint Condition 3>>

In the present embodiment, the constraint conditions of the following expression (21) and expression (22) are imposed for each substance i of "Type 1" or "Type 3".

[Math 13]

$$
\begin{cases}
\dfrac{M_{i,MIN} + M_{i,MAX}}{2} n_{i0} + \sum_{j=1}^{m_i} C_j n_{ij} \le M_{i,MAX} & \cdots(21) \\[5ex]
\dfrac{M_{i,MIN} + M_{i,MAX}}{2} n_{i0} + \sum_{j=1}^{m_i} C_j n_{ij} \ge M_{i,MIN} & \cdots(22)
\end{cases}
$$

For example, in the expression (21) and expression (22), $M_{i,MIN}$ denotes the minimum amount for the amount $r_i$ of the substance i. $M_{i,MAX}$ denotes the maximum amount for the amount $r_i$ of the substance i. The second left term of each of the expression (21) and expression (22) is the amount $r_i$ of the substance i, as indicated in the formula (14) described above.

The inequality constraint of the expression (21) is a constraint condition for determining whether the amount $r_i$ of the substance i is less than or equal to the maximum amount $M_{i,MAX}$ for the amount $r_i$ of the substance i. The inequality constraint of the expression (22) is a constraint condition for determining whether the amount $r_i$ of the substance i is greater than or equal to the minimum amount $M_{i,MIN}$ for the amount $r_i$ of the substance i.

The first left term of each of the expression (21) and expression (22) is included to satisfy a condition greater than or equal to $M_{i,MIN}$ in a case where the auxiliary variable $n_{i0}$ in the left term is "1" and the second left term is "0" in the expression (22).

For example, in the case of the substance i of "Type 1" in which the minimum unit of the amount is 0.1 and the amount is "2 to 10", "$M_{1,MIN} = 2$", "$M_{1,MAX} = 10$", and "$m_1 = 7$" are obtained. The constraint condition 3 is a constraint condition of the amount of the substance i of "Type 1" or "Type 3".

<<Constraint Condition 4>>

In the present embodiment, the constraint condition of the following formula (23) is imposed for each substance i of "Type 2" or "Type 4".

[Math 14]

$$\sum_{j=1}^{m_i} n_{ij} = 1 \quad \cdots(23)$$

In the formula (23), $m_i$ denotes the number of discrete values representing the amount of the substance i. For example, in a case where the discrete value of the amount of the substance i is "$M_{i,1} = 5$" and "$M_{i,2} = 12$", "$L = 2$" is obtained. The constraint condition 4 is a constraint condition of a bit notation representing the amount of the substance i of "Type 2" or "Type 4".

<<Constraint Condition 5>>

In the present embodiment, the mixing of the substance i of "Type 3" or "Type 4" in the composite material is required. Accordingly, in the present embodiment, the constraint condition of the following formula (21) is imposed for each substance i of "Type 3" or "Type 4".

$$\text{Auxiliary variable } n_{i0} = 0 \quad \cdots(24)$$

The auxiliary variable $n_{i0}$ becomes "0" in a case where the composite material includes the substance. Accordingly, the constraint condition 5 is a constraint condition that the substance i of "Type 3" or "Type 4" is required.

In the case where the bit notation illustrated in FIG. 9 is used as the bit notation of the substance of "Type 4", the constraint condition 5 imposes the same constraint as the constraint condition 2 on the substance of "Type 4", and the constraint condition 2 does not need to be imposed if the constraint conditions 4 and 5 are imposed.

In addition, in a case where the bit notation illustrated in FIG. 10 is used as the bit notation of the substance of "Type 4", the example of the constraint condition 4 described above is not appropriate, and the constraint conditions 2 and 5 may be imposed.

<Processing>

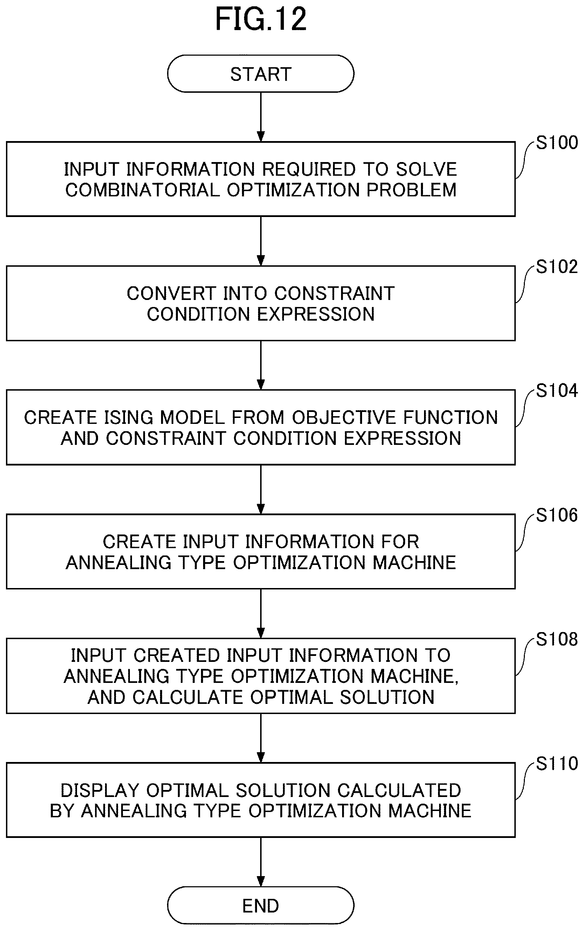

FIG. 12 is a flow chart illustrating an example of a processing procedure of the information processing system according to the present embodiment.

In step S100, the information processing device 12 receives, from the user, the input of the information required by the annealing type optimization machine 10 to solve the combinatorial optimization problem. For example, the information processing device 12 receives the input of the objective function that formulates the characteristics of the composite material according to the formulation of the substances. In addition, the information processing device 12 receives the input of the condition of constraint on the formulation.

The condition of constraint on the formulation may be input by receiving a selection from the substances i of "Type 1" to "Type 4" described above from the user, and thereafter receiving the input of the condition of constraint on the formulation of the substance i of the selected type. In addition, the information processing device 12 may determine the substances i of "Type 1" to "Type 4" from the received input of the condition of constraint on the formulation of the substance i.

In step S102, the information processing device 12 converts the condition of constraint on the formulation received in step S100 into a constraint condition expression. The information processing device 12 converts the condition of constraint on the formulation into the constraint condition expression, based on the information of the constraint condition expression defined according to the type of the substance i stored in the constraint condition expression information storage unit 52. The process of converting the condition of constraint on the formulation into the constraint condition expression may be performed by the user.

In step S104, the information processing device 12 creates the Ising model to be solved by the annealing type optimization machine 10, from the objective function and the constraint condition expression.

In step S106, the information processing device 12 creates the input information in the data format utilizable by the annealing type optimization machine 10, from the created Ising model, and transmits the input information to the annealing type optimization machine 10. The input information in the data format utilizable by the annealing type optimization machine 10 includes contents of the objective function and the constraint condition expression. The input information for the annealing type optimization machine 10 is an electronic file to be transmitted to the annealing type optimization machine 10, for example.

In step S108, the information processing device 12 transmits the input information for the annealing type optimization machine 10 to the annealing type optimization machine 10. The annealing type optimization machine 10 calculates the optimal solution (the formulation of the substances that optimizes the characteristics of the composite material) from among the solutions satisfying the constraint condition (the condition of constraints on the formulation), according to the received input information.

In step S110, the annealing type optimization machine 10 transmits information representing the calculated optimal solution to the information processing device 12. The information processing device 12 converts the information (bit information) representing the optimal solution received from the annealing type optimization machine 10 into the information on the formulation of the substances of the composite material or the like, which is easy for the user to understand, and outputs the information. For example, the information processing device 12 displays the composition (substance name) of the composite material of the optimal solution, and the amount of the substance.

The composition of the composite material searched as the optimal solution in the present embodiment can be used for controlling a composite material production device, such as an aluminum alloy production device or the like, for example, that produces a composite material by specifying substances to be mixed and amounts of the substances, or the like. The present embodiment can also be used for searching for a formulation composition of a semiconductor material as an example of the composite material. Examples of the semiconductor material include a resist material, an adhesive, a pressure sensitive adhesive, a sealer, or the like, and the semiconductor material is a composite material composed to include a plurality of resins, additives, and/or fillers.

As described above, the information processing system 1 according to the present embodiment can assist with the creation of the Ising model for causing the annealing type optimization machine 10 to solve the optimization problem of the composite material having the condition of constraint on the formulation.

Although the present embodiment is described above, it will be understood that various variations in form and detail may be made without departing from the spirit and scope of the appended claims. Although the present invention is described above based on the embodiments, the present invention is not limited to the above described embodiments, and various modifications can be made within the scope defined in the claims. This application is based upon and claims priority to Japanese Patent Application No. 2022-117503 filed on July 22, 2022, the entire contents of which are incorporated herein by reference.

DESCRIPTION OF REFERENCE NUMERALS

1: Information processing system
10: Annealing type optimization machine
12: Information processing device
18: Communication network
20: Call reception unit
22: Optimal solution calculation unit
30: Input reception unit
32: Conversion unit

34: Data creation unit
36: Display unit
50: Substance information storage unit
52: Constraint condition expression information storage unit

## Claims

1. An information processing device configured to assist with creation of an Ising model for causing an annealing type optimization machine to solve an optimal solution search problem of a composite material having a condition of constraint on a formulation, **characterized by** the information processing device comprising:

   an input reception unit configured to receive an input of an objective function that formulates characteristics of the composite material according to the formulation, and the condition of constraint on the formulation; and
   a data creation unit configured to create an Ising model for causing the annealing type optimization machine to solve an optimal solution of the formulation that satisfies a constraint condition expression obtained by formulating the condition of constraint on the formulation and that optimizes the characteristics, wherein
   the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and
   the constraint condition expression is formulated so as not to be calculated as the optimal solution of the formulation in a case where at least one of the condition regarding the mix number and the condition related to the amount of substance is not satisfied.

2. The information processing device as claimed in claim 1, **characterized in that**

   the condition of constraint on the formulation further includes a condition indicating whether or not mixing to the composite material is required for each substance included in the substance group, and
   the constraint condition expression is formulated so as not to be calculated as the optimal solution of the formulation in a case where the condition that the mixing to the composite material is required is not satisfied.

3. The information processing device as claimed in claim 1 or 2, wherein
   in a case where the condition related to the amount of substance to be mixed in the composite material is set to a continuous value, an amount $r_i$ of a substance i is represented by a bit notation in the following formula (1), and whether or not the substance i is included in the composite material is represented by a bit notation,
   [Math. 1]

$$r_i = \sum_{j=1}^{m_i} C_j n_{ij} \qquad \cdots (1)$$

   $n_{i,j}$ denotes a number "0" or "1" of a binary representation of a formulation of the substance i,
   $C_j$ denotes a coefficient of the binary representation of the formulation of the substance i,
   $m_i$ denotes a maximum natural number satisfying $2^{m_i-1} \cdot C_1 < M_{i,MAX}$,
   $C_1$ denotes an amount of the substance to be mixed in minimum units, and
   $M_{i,MAX}$ denotes a maximum amount of the amount $r_i$ of the substance i.

4. The information processing device as claimed in claim 3, wherein, in a case where the condition related to the amount of substance to be mixed in the composite material is set to a discrete value, the amount $r_i$ of the substance i is represented by a bit notation, and whether or not the substance i is included in the composite material is represented by a bit notation.

5. The information processing device as claimed in claim 3 or 4, wherein
   the constraint condition expression includes a condition satisfying the following expression (2) and expression (3) for each substance group k,

[Math. 2]

$$\begin{cases} \sum_{i=L_k+1}^{L_k+N_k} n_{i0} \le N_k - K_{k,MIN} & \cdots(2) \\[2em] \sum_{i=L_k+1}^{L_k+N_k} n_{i0} \ge N_k - K_{k,MAX} & \cdots(3) \end{cases}$$

a substance number i of the substance included in a substance group $K_k$ is $L_k+1$ to $L_k+N_k$,
$N_k$ denotes a number of substances included in the substance group $K_k$,
the mix number is greater than or equal to $K_{k,MIN}$ types and less than or equal to $K_{k,MAX}$ types,
$L_k$ is represented by
[Math. 3]

$$L_k = \sum_{k=1}^{k-1} N_k \qquad \cdots(4)$$

$n_{i,0}$ denotes an auxiliary variable that becomes "0" in a case where the substance i is included in the composite material, and becomes "1" in a case where the substance i is not included in the composite material.

6. The information processing device as claimed in any one of claims 3 to 5, wherein
the constraint condition expression includes a condition satisfying the following expression (5) and expression (6) for each substance i,

[Math. 4]

$$\begin{cases} (m_i + 1)n_{i0} + \sum_{j=1}^{m_i} n_{ij} \le m_i + 1 & \cdots(5) \\[2em] (m_i + 1)n_{i0} + \sum_{j=1}^{m_i} n_{ij} \ge 1 & \cdots(6) \end{cases}$$

$n_{i,0}$ denotes an auxiliary variable that is "0" in a case where the substance i is included in the composite material, and is "1" in a case where the substance i is not included in the composite material,
$m_i$ denotes a maximum natural number satisfying $2^{m_i-1} \cdot C_1 < M_{i,MAX}$ in a case where a condition related to the amount $r_i$ of the substance i to be mixed in the composite material is set by a continuous value,
$C_1$ denotes the minimum unit of the amount of substance to be mixed, and
$m_i$ denotes a number of discrete values in a case where the condition related to the amount $r_i$ of the substance i to be mixed to the composite material is set by a discrete value.

7. The information processing device as claimed in any one of claims 3 to 6, wherein
the constraint condition expression includes a condition satisfying the following expression (7) and expression (8) for each substance i in a case where a condition related to the amount of substance to be mixed in the composite material is set by a continuous value, and

[Math. 5]

$$\begin{cases} \dfrac{M_{i,MIN} + M_{i,MAX}}{2} n_{i0} + \sum_{j=1}^{m_i} C_j n_{ij} \leq M_{i,MAX} & \cdots(7) \\[3em] \dfrac{M_{i,MIN} + M_{i,MAX}}{2} n_{i0} + \sum_{j=1}^{m_i} C_j n_{ij} \geq M_{i,MIN} & \cdots(8) \end{cases}$$

$M_{i,MIN}$ denotes a minimum amount for the amount $r_i$ of the substance i, and
$n_{i,0}$ denotes an auxiliary variable that is "0" in a case where the substance i is included in the composite material, and is "1" in a case where the substance i is not included in the composite material.

8. The information processing device as claimed in any one of claims 3 to 7, wherein
the constraint condition expression includes a condition satisfying the following formula (9) for each substance i in a case where a condition related to an amount of substance to be mixed in the composite material is set by a discrete value, and
[Math. 6]

$$\sum_{j=1}^{m_i} n_{ij} = 1 \qquad \cdots(9)$$

$m_i$ denotes a number of discrete values.

9. The information processing device as claimed in any one of claims 3 to 8, wherein
the constraint condition expression includes a condition satisfying an auxiliary variable that is "0" for each substance i that is required to be mixed in the composite material, where the auxiliary variable is "0" in a case where the substance i is included in the composite material and is "1" in a case where the substance i is not included in the composite material.

10. The information processing device as claimed in any one of claims 1 to 9, wherein
the constraint condition expression is classified into a plurality of types, according to a condition related to a mix number of substances included in the substance group to be mixed in the composite material for each substance group composing the composite material, a condition related to an amount of substance to be mixed in the composite material for each substance included in the substance group, and a condition indicating whether or not mixing of the substance in the composite material is required for each substance included in the substance group.

11. An information processing system having an annealing type optimization machine, and an information processing device configured to assist with creation of an Ising model for causing the annealing type optimization machine to solve an optimal solution search problem of a composite material including a condition of constraint on a formulation, **characterized by** the information processing system comprising:

an input reception unit configured to receive an input of an objective function that formulates characteristics of the composite material according to the formulation, and a condition of constraint on the formulation;
a data creation unit configured to create the Ising model for causing the annealing type optimization machine to solve an optimal solution of the formulation that satisfies a constraint condition expression obtained by formulating the condition of constraint on the formulation and optimizes the characteristics;
an optimal solution calculation unit configured to calculate the optimal solution of the formulation using the Ising model; and
a display unit configured to display the optimal solution of the formulation, wherein
the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and

the constraint condition expression is formulated so as not to be calculated as the optimal solution of the formulation in a case where at least one of the condition regarding the mix number and the condition related to the amount of substance is not satisfied.

12. A program for causing an information processing device configured to assist with creation of an Ising model for causing an annealing type optimization machine to solve an optimal solution search problem of a composite material having a condition of constraint on a formulation to perform a process **characterized by**:

a procedure receiving an input of an objective function that formulates characteristics of the composite material according to the formulation, and a condition of constraint on the formulation; and

a procedure creating the Ising model for causing the annealing type optimization machine to solve an optimal solution of the formulation that satisfies a constraint condition expression obtained by formulating the condition of constraint on the formulation and optimizes the characteristics, wherein

the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and

the constraint condition expression is formulated so as not to be calculated as the optimal solution of the formulation in a case where at least one of the condition regarding the mix number and the condition related to the amount of substance is not satisfied.

13. A method for assisting an information processing device with creation of an Ising model for causing an annealing type optimization machine to solve an optimal solution search problem of a composite material including a condition of constraint on a formulation, **characterized by** the method comprising:

receiving an input of an objective function that formulates characteristics of the composite material according to the formulation, and a condition of constraint on the formulation; and

creating the Ising model for causing the annealing type optimization machine to solve an optimal solution of the formulation that satisfies a constraint condition expression obtained by formulating the condition of constraint on the formulation and optimizes the characteristics, wherein

the condition of constraint on the formulation includes a condition related to a mix number of substances included in a substance group and to be mixed in the composite material, for each substance group composing the composite material, and a condition related to an amount of substance to be mixed in the composite material, for each substance included in the substance group, and

the constraint condition expression is formulated so as not to be calculated as the optimal solution of the formulation in a case where at least one of the condition regarding the mix number and the condition related to the amount of substance is not satisfied.

# FIG.1

1

# FIG.2

EP 4 560 548 A1

# FIG.3

**CONDITION OF RESTRAINT ON FORMULATION**

| Substance Group 1 | Substance 1 | Substance 2 | Substance 3 | Substance 4 | Substance 5 |
|---|---|---|---|---|---|
| Mix Number | 1 type or more and 3 types of less | | | | |
| Continuous/ Discrete | Continuous | Continuous | Discrete | Discrete | Continuous |
| Amount | 10 to 30 | 10 to 20 | 3, 5, 10 | 20, 50 | 9 to 30 |

| Substance Group 2 | Substance 6 | Substance 7 | Substance 8 |
|---|---|---|---|
| Mix Number | 0 type or more and 2 types or less | | |
| Continuous/ Discrete | Continuous | Continuous | Discrete |
| Amount | 5 to 10 | 1 to 2 | 3, 5 |

EP 4 560 548 A1

# FIG.4

**ANNEALING TYPE OPTIMIZATION MACHINE** ~10

- CALL ACCEPTANCE UNIT ~20
- OPTIMAL SOLUTION CALCULATION UNIT ~22

~18

~1

**INFORMATION PROCESSING DEVICE** ~12

- INPUT RECEPTION UNIT ~30
- CONVERSION UNIT ~32
- DATA CREATION UNIT ~34
- DISPLAY UNIT ~36
- SUBSTANCE INFORMATION STORAGE UNIT ~50
- CONSTRAINT CONDITION EXPRESSION INFORMATION STORAGE UNIT ~52

EP 4 560 548 A1

# FIG.5

| Substance Group 2 | Substance 6 | Substance 7 | Substance 8 |
|---|---|---|---|
| Mix Number | 0 type or more and 2 types or less | | |
| Continuous/ Discrete | Continuous | Continuous | Discrete |
| Amount | 5 to 10 | 1 to 2 | 3, 5 |
| Type | 1 | 1 | 2 |

# FIG.6

| Substance Group 2 | Substance 6 | Substance 7 | Substance 8 | Substance 9 | Substance 10 |
|---|---|---|---|---|---|
| Mix Number | 2 types or more and 4 types or less | | | | |
| Continuous/ Discrete | Continuous | Continuous | Discrete | Continuous | Discrete |
| Amount | 5 to 10 | 1 to 2 | 3, 5 | 42 to 120 | 30, 50 |
| Required | Mixed/Unmixed | | | Required | Required |
| Type | 1 | 1 | 2 | 3 | 4 |

EP 4 560 548 A1

# FIG.7

EP 4 560 548 A1

BIT NOTATION OF SUBSTANCES OF "Type 1" AND "Type 3"

Amount $r_i$ of substance i

$$r_i = \sum_{j=1}^{m_i} C_j n_{ij}$$

$n_{ij}$ :: 0 or 1

$C_j$ :: Coefficient of bit $n_{ij}$ in binary representation

$C_1$ :: Minimum unit of amount

$m_i$ :: Maximum natural number satisfying $2^{m-1} \cdot C_1 < M_{i,MAX}$

$M_{i,MIN}$ :: Minimum amount for amount $r_i$ of substance i

$M_{i,MAX}$ :: Maximum amount for amount $r_i$ of substance i

$C_2 = 2^1 C_1$

$C_3 = 2^2 C_1$

$C_4 = 2^3 C_1$

$\cdots$

Auxiliary variable $n_{i0}$ of substance i

$n_{i0} = 0$ ( $r_i > 0$ )

$n_{i0} = 1$ ( $r_i = 0$ )

# FIG.8

SPECIFIC EXAMPLE OF BIT NOTATION OF "Substance 1" of "Type 1"

$m_1$ ↓

| $j$ | 1 | 2 | 3 | 4 | 5 | 6 | 7 |
|---|---|---|---|---|---|---|---|
| $c_j$ | 0.1 | 0.2 | 0.4 | 0.8 | 1.6 | 3.2 | 6.4 |

○ CASE WHERE AMOUNT OF "Substance 1" = 4.2

| $j$ | 1 | 2 | 3 | 4 | 5 | 6 | 7 |
|---|---|---|---|---|---|---|---|
| $c_j$ | 0.1 | 0.2 | 0.4 | 0.8 | 1.6 | 3.2 | 6.4 |
| $n_{1j}$ | 0 | 1 | 0 | 1 | 0 | 1 | 0 |

EP 4 560 548 A1

# FIG.9

BIT NOTATION OF SUBSTANCES OF "Type 2" AND "Type 4"

Amount $r_i$ of substance i  $\quad r_i = \sum_{j=1}^{m_i} M_{ij}$

| $n_{ij}$ /Amount (discrete value) | 0 | $M_{i,1}$ | $M_{i,2}$ | $\cdots$ | $M_{i,L}$ |
|---|---|---|---|---|---|
| $n_{i0}$ | 1 | 0 | 0 | | 0 |
| $n_{i1}$ | 0 | 1 | 0 | | 0 |
| $n_{i2}$ | 0 | 0 | 1 | | 0 |
| $\vdots$ | | | | | |
| $n_{im_i}$ | 0 | 0 | 0 | | 1 |

Auxiliary variable $n_{i0}$ of substance i

$$n_{i0} = 0 \ (\ r_i > 0\ )$$
$$n_{i0} = 1 \ (\ r_i = 0\ )$$

# FIG.10

BIT NOTATION OF SUBSTANCES OF "Type 2" AND "Type 4"

Amount $r_i$ of substance i $\quad r_i = \displaystyle\sum_{j=1}^{m_i} M_{ij}$

| $n_{ij}$ /Amount (discrete value) | 0 | $M_{i,1}$ | $M_{i,2}$ | $\cdots$ | $M_{i,L}$ |
|---|---|---|---|---|---|
| $n_{i0}$ | 1 | 0 | 0 | | 0 |
| $n_{i1}$ | 0 | 1 | 0 | | 0 |
| $n_{i2}$ | 0 | 1 | 1 | | 0 |
| $\vdots$ | | | | | |
| $n_{im_i}$ | 0 | 1 | 1 | | 1 |

Auxiliary variable $n_{i0}$ of substance i

$$n_{i0} = 0 \; ( \, r_i > 0 \, )$$
$$n_{i0} = 1 \; ( \, r_i = 0 \, )$$

# FIG.11

BIT NOTATION OF COMPOSITION OF COMPOSITE MATERIAL

| Substance Group 1 | Substance 1 | Substance 2 | Substance 3 | Substance 4 | Substance 5 |
|---|---|---|---|---|---|
| Mix Number | 1 type or more and 3 types or less | | | | |
| Continuous/ Discrete | Continuous | Continuous | Discrete | Discrete | Continuous |
| Amount | 10 to 30 | 10 to 20 | 3, 5, 10 | 20, 50 | 9 to 30 |

| | Bit |
|---|---|
| Substance 1 | $n_{10}$ $\quad$ $n_{1j}$ |
| Substance 2 | $n_{20}$ $\quad$ $n_{2j}$ |
| Substance 3 | $n_{30}$ $\quad$ $n_{3j}$ |
| Substance 4 | $n_{40}$ $\quad$ $n_{4j}$ |
| Substance 5 | $n_{50}$ $\quad$ $n_{5j}$ |
| ... | |

EP 4 560 548 A1

# FIG.12

```
┌─────────────────────┐
│        START        │
└─────────────────────┘
           │
           ▼
┌─────────────────────────────────────┐  S100
│  INPUT INFORMATION REQUIRED TO SOLVE │
│  COMBINATORIAL OPTIMIZATION PROBLEM  │
└─────────────────────────────────────┘
           │
           ▼
┌─────────────────────────────────────┐  S102
│         CONVERT INTO CONSTRAINT      │
│         CONDITION EXPRESSION         │
└─────────────────────────────────────┘
           │
           ▼
┌─────────────────────────────────────┐  S104
│ CREATE ISING MODEL FROM OBJECTIVE    │
│ FUNCTION AND CONSTRAINT CONDITION    │
│ EXPRESSION                           │
└─────────────────────────────────────┘
           │
           ▼
┌─────────────────────────────────────┐  S106
│       CREATE INPUT INFORMATION FOR   │
│   ANNEALING TYPE OPTIMIZATION MACHINE│
└─────────────────────────────────────┘
           │
           ▼
┌─────────────────────────────────────┐  S108
│  INPUT CREATED INPUT INFORMATION TO  │
│  ANNEALING TYPE OPTIMIZATION MACHINE,│
│  AND CALCULATE OPTIMAL SOLUTION      │
└─────────────────────────────────────┘
           │
           ▼
┌─────────────────────────────────────┐  S110
│  DISPLAY OPTIMAL SOLUTION CALCULATED │
│  BY ANNEALING TYPE OPTIMIZATION      │
│  MACHINE                             │
└─────────────────────────────────────┘
           │
           ▼
┌─────────────────────┐
│         END         │
└─────────────────────┘
```

## INTERNATIONAL SEARCH REPORT

| International application No. |
|---|
| **PCT/JP2023/025658** |

| A. | CLASSIFICATION OF SUBJECT MATTER |
|---|---|

*G06N 99/00*(2019.01)i
FI: G06N99/00 180

According to International Patent Classification (IPC) or to both national classification and IPC

| B. | FIELDS SEARCHED |
|---|---|

Minimum documentation searched (classification system followed by classification symbols)

G06N99/00

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| A | JP 2021-127418 A (FUJITSU LTD) 02 September 2021 (2021-09-02)<br>in particular, paragraphs [0020]-[0022], [0050]-[0054], [0076]-[0095] | 1-13 |
| A | 斉藤 努, Pythonによる問題解決シリーズ1 データ分析ライブラリーを用いた最適化モデルの作り方, 株式会社近代科学社, 31 December 2018, p. 92<br>in particular, p. 92, line 7, etc., (SAITO, Tsutomu. KINDAI KAGAKU SHA CO., LTD.), non-official translation (Problem solving series with Python 1: How to create an optimization model using a data analysis library) | 1-13 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **22 August 2023** | **05 September 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/025658**

| Patent document<br>cited in search report | Publication date<br>(day/month/year) | Patent family member(s) | Publication date<br>(day/month/year) |
|---|---|---|---|
| JP      2021-127418      A | 02 September 2021 | US      2021/0256185      A1<br>in particular, paragraphs<br>[0040]-[0045], [0105]-[0121],<br>[0165]-[0224]<br>EP            3866170      A1<br>CN          113268126      A | |

Form PCT/ISA/210 (patent family annex) (January 2015)

**REFERENCES CITED IN THE DESCRIPTION**

**Patent documents cited in the description**

- JP 2021033768 A

- JP 2022117503 A